# EUROPÄISCHE PATENTSCHRIFT

(11) **EP 1 791 387 B1**
(45) Veröffentlichungstag und Bekanntmachung des Hinweises auf die Patenterteilung: **23.01.2013**
(21) Anmeldenummer: 05025633.8
(22) Anmeldetag: 24.11.2005
(51) Int. Cl.: H04Q 9/00, G08C 17/02, G08C 23/04

(54) **Überwachungsvorrichtung für Werkzeuge und Aggregate eines Bearbeitungszentrums**
Monitoring device for tools and power units of a machining centre
Dispositif de surveillance destiné aux groupes d'un centre d'usinage

(43) Veröffentlichungstag der Anmeldung: 30.05.2007
(73) Patentinhaber: Homag Holzbearbeitungssysteme AG, 72296 Schopfloch (DE)
(72) Erfinder: Gauss, Achim, 72280 Dornstetten/Hallwangen (DE); Sturm, Gotthilf, 72293 Glatten (DE)
(74) Vertreter: HOFFMANN EITLE

(56) Entgegenhaltungen:
- WO-A-2004/027726
- US-A- 5 854 994
- US-A1- 2004 018 827

## Beschreibung

### Gebiet der Erfindung

Die vorliegende Erfindung bezieht sich auf eine Vorrichtung zum Überwachen von Werkzeugen bzw. Aggregaten eines Bearbeitungszentrums, insbesondere von solchen Werkzeugen bzw. Aggregaten, bei denen auf die Funktion des Werkzeugs gerichtete physikalische Messgrößen überwacht werden sollen.

### Stand der Technik

In der holzbearbeitenden Industrie werden bei der Bearbeitung von Werkstücken (z.B. Platten oder Rahmenteilen) aus holz-oder holzähnlichen Materialien häufig CNC-Bearbeitungszentren eingesetzt. Diese Bearbeitungszentren setzen eine Vielzahl unterschiedlicher Werkzeuge bzw. Werkzeugaggregate ein, um verschiedene Bearbeitungsschritte an den Werkstücken durchzuführen. Als Beispiel seien hier Werkzeuge wie Bohrer und Aggregate wie die zur Aufspannung von Platten verwendeten Vakuum-Aufspanntische genannt. Der Einsatz dieser Werkzeuge bzw. Aggregate kann hierbei durch verschiedene Bearbeitungsvariablen wie z.B. Drehzahl charakterisiert werden. Zusätzlich ist es jedoch auch von Vorteil, physikalische Zustandsgrößen, wie z.B. Werkzeugtemperatur im Fall des Bohrers oder Unterdruck im Fall des Vakuum-Aufspanntischs, zur Verfügung zu haben, um die Werkzeuge bzw. Aggregate unter Berücksichtigung dieser Größen optimal steuern zu können.
Somit werden in jüngster Zeit Sensoren in das Bearbeitungszentrum eingebaut, die solche Messgrößen an die Steuerung liefern können. Als Beispiel diene hier wiederum der Vakuum-Aufspanntisch, bei der sich zwischenzeitlich am Markt eine sensorüberwachte, schlauchlose Vakuumversorgung der Sauger etabliert hat. Diese schlauchlose Versorgung durch den Tisch, ermöglicht ein flexibles Setzen von Saugern in Anzahl und Position.

Bisher wurden in herkömmlichen Bearbeitungszentren nur wenige Sensoren an zentralen Stellen, wie z.B. dem Bohrfutter oder dem zentralen Vakuumsystem, vorgesehen. So wird beispielsweise bei den Vakuum-Aufspanntischen lediglich ein Vakuumwächter (Sensor) im zentralen Vakuumsystem integriert, um das Vakuum kontinuierlich zu überwachen. Die Maschine kann dann, um Unfälle zu vermeiden, bei plötzlichem Vakuumabfall gestoppt werden, wenn das Werkstück nicht mehr sicher festgespannt ist.

Die Nachteile hierbei sind, dass eine Erfassung von Messdaten nicht am Werkzeug bzw. Aggregat selbst oder nur an wenigen Stellen zwangsläufig kein genaues und komplettes Bild der Werkstückbearbeitung liefern kann. Im Falle des Vakuumsystems werden zum Beispiel je nach Werkstückgröße unterschiedlich viele Sauger platziert. Aufgrund des hohen Saugvermögens, das durch die Vakuumpumpe zur Verfügung gestellt wird, kann es zu Situationen kommen, bei dem das Vakuum unter einem Sauger durch Leckage zusammenbricht und der zentrale Vakuumwächter dies nicht detektiert. Dies bedeutet, dass es zu Gefahrensituationen kommen kann, ohne dass die Maschinensteuerung etwas davon merkt.

Um hier diesen Problemen entgegenzutreten kann in jedes Einzelwerkzeug bzw. Aggregat ein Sensor integriert werden. Entsteht nun eine Fehlersituation, so erkennt der Sensor unmittelbar die Gefahr und stoppt die Maschine. Nachteil hierbei ist, dass jedes Einzelwerkzeug bzw. Aggregat, das mit einem Sensor ausgestattet wurde, durch ein Kabel mit der Steuerelektronik verbunden sein muss, was die Flexibilität des Systems stark einschränkt. Neben dem erheblichen Mehraufwand an Kosten und Komplexität können außerdem die Leitungen durch abfallende Restteile der beschädigt oder gar zerstört werden.

Eine parallele Problematik besteht nicht nur bei der Übermittlung von sensorischen Messdaten an die Steuerung, sondern auch bei der Übermittlung von Steuersignalen von der Steuerung an die einzelnen Werkzeuge bzw. Aggregate.

Die WO 00/13826 A1 offenbart ein Bearbeitungszentrum in welchem auswechselbare Werkzeuge zur Bearbeitung von Werkstücken vorgesehen sind. Am Werkzeug ist ein Messwertgeber angeordnet, der Referenzsignale mithilfe einse Senders an die numerische Steuerung des Bearbeitungszentrums übermittelt.

Die GB 2 126 758 A offenbart ein Bearbeitungszentrum, welches Techniken zur drahtlosen Übertragung von Informationen verwendet und zum Beispiel Vorgänge wie Fräsen, Bohren, usw. an einem Werkstück durchführt. Die Druckschrift offenbart Messfühler, die das Festklemmen bzw. Einlegen eines Werksücks erfassen und über eine IR-Diode an einen Empfänger im Bearbeitungszentrum übermitteln. Es werden also keine Zustandsdaten des Werkzeugs/Aggregats gemessen, sondern Informationen über das Werkstück ermittelt.

Die US 2003/030565 A1 schließlich betrifft einen drahtlosen Sensor sowie eine dazugehörige Managementvorrichtung eines Überwachungssystems. Das Überwachungssystem besteht aus einer Vielzahl von kabellosen Sensoren sowie einer zugehörigen Managementvorrichtung, wobei die kabellosen Sensoren zur Überwachung an eine Spindel und eine Drehwelle einer Werkzeugmaschine angebracht werden.

Die US, 4,254,676 A betrifft eine Werkstückspannvorrichtung in Form eines Einspannfutters, dessen Klemmbacken mithilfe von Kolben mit Überdruck pneumatisch betätigt werden können. Eine Backe des Einspannfutters ist mit einem Sensor versehen, der die auf die Backe wirkende Radialkraft misst und die gemessenen Signale mithilfe von Radiowellen zu einer Empfangsvorrichtung übertragen kann, sodass die sonst notwendigen Schleifkontaktringe am rotierenden Einspannfutter vermieden werden können.

Keine der gennanten Schriften offenbart hingegen, dass zusätzlich ein oder mehrere weitere Positionsempfänger vorgesehen sind, die die Position des Werkzeugs bzw. Aggregats anhand der vom Sender kabellos gesendeten Datensignale bestimmen können.

### Darstellung der Erfindung

Der Erfindung liegt nun die Aufgabe zugrunde eine Vorrichtung zur Überwachung von Werkzeugen bzw. Aggregaten zu entwickeln, bei der in jedem Werkzeug/Aggregat Messgrößen erfasst werden können und die Informationen ohne direkte Verbindung wie eine elektrische Leitung oder einen Schlauch zur Steuerelektronik übertragen werden können, und dabei aufgrund der drahtlos übermittelten Messgrößen zusätzlich Positionsdaten des Werkzeugs/Aggregats bestimmt werden können. So kann eine umfassende und detaillierte Überwachung der Bearbeitung realisiert werden.

Die oben genannte Aufgabe wird entsprechend der Erfindung von einer Vorrichtung zur Überwachung von Werkzeugen bzw. Aggregaten eines Bearbeitungszentrums gelöst, die umfassend jeweils mindestens einen in dem Werkzeug bzw. Aggregat angeordneten Sensor und einen damit verbundenen Sender, sowie einen mit dem oder den Sendern kommunizierenden, am Bearbeitungszentrum angebrachten Empfänger umfasst, wobei der Sensor geeignet ist, Zustands- und/oder Funktionsdaten des jeweiligen Werkzeugs bzw. Aggregats zu messen und diese Daten dem Sender zu übermitteln, und der Sender geeignet ist, die ihm übermittelten Daten an den Empfänger im Bearbeitungszentrum kabellos zu übertragen, so dass das Bearbeitungszentrum entsprechend den empfangenen Daten gesteuert werden kann. Die Vorrichtung ist weiter dadurch gekenzeichnet, dass sie oder mehrere Positionsempfänger umfasst, welche die Position des Werkzeugs bzw. Aggregats anhand der von dessen Sender kabellos gesendeten Datensignale bestimmt. Die Vorteile dieser Vorrichtung im Vergleich zum Stand der Technik ergeben sich aus der Umsetzung der kabellosen Übertragungstechnik, die den Einbau einer großen Anzahl von Sensoren auch an schwierigen Stellen in einem Bearbeitungszentrum ermöglicht, und insbesondere bei sich bewegenden Werkzeugen bzw. Aggregaten die räumliche Zuordnung der Messdaten ermöglicht, was auch Vereinfachungen bei der Steuersoftware mit sich bringt. Somit wird einerseits die erwünschte Überwachungsgenauigkeit erreicht und andererseits können komplizierte Verkabelungen vermieden werden. Dementsprechend werden die Kosten für die Ausrüstung mit Sensoren gering gehalten und die Betriebssicherheit des Bearbeitungszentrums maximiert.

In einer bevorzugten Ausführungsform überträgt der Sender mit jeder Messdatenübertragung auch Identifikationsdaten des Werkzeugs bzw. des Aggregats. Dies ermöglicht die exakte Zuordnung der Messdaten zu einem Werkzeug/Aggregat und hilft wesentlich bei der Entdeckung und Behebung von Fehlern während der Bearbeitung.

Es ist hierbei bevorzugt, dass der Sender einen RFID-Transponder umfasst. Diese Übertragungstechnik ist einerseits kostengünstig und erfordert geringen konstruktiven Aufwand. Andererseits ermöglicht sie die lokale Speicherung von Zustandsdaten und erfordert keine eigene Stromversorgung, da die zum Auslesen der Daten benötigte Energie vom Empfänger in der Steuerung aufgebracht wird. Alternativ können statt RFID auch Wireless LAN oder Bluetooth als Übertragungstechnik verwendet werden, die zudem jeweils eine einfache Datenübertragung an PCs bzw. mobile Datenerfassungsgeräte ermöglichen.

Nach einer anderen Ausführungsform der Erfindung ist der Sender ein Infrarot-Sender und der Empfänger ein Infrarot-Empfänger. Diese Lösung ist dann von Vorteil, wenn aufgrund technischer Gegebenheiten keine Funkübertragung möglich oder erwünscht ist.

In einer bevorzugten Ausführungsform der Erfindung ist der Sensor ein Vakuumwächter. Dies ist bei Werkzeugen bzw.

Aggregaten der Fall, die Unterdruck zur korrekten Arbeitsweise benötigen. Nach einer weiteren Ausführungsform ist der Sensor ein Temperatur- Schwingungs- oder Drucksensor, jedoch sind auch weitere Arten von Sensoren denkbar.

Entsprechend einer weiteren Ausführungsform ist das Werkzeug bzw. Aggregat auswechselbar. Dies ist z.B. bei Bohrern oder Fräsen der Fall, und auch hier ist die kabellose Übertragungstechnik vorteilhaft, da die Sensoren somit in jedes Werkzeug bzw. Aggregat einbaubar sind, und der Einbau nicht nur auf die Werkzeugaufnahme beschränkt bleibt.

Besonders bevorzugt ist das Werkzeug bzw. Aggregat ein mechanisches, hydraulisches oder pneumatisches Werkstückspannelement (pneumatisch bedeutet in diesem Zusammenhang sowohl mit Überdruck als auch mit Unterdruck betriebene Werkzeuge/Aggregate). Bei diesem Spannelement kommt meist eine große Anzahl von Einzelwerkzeugen, z.B. Saugern, zum Einsatz, so dass die Überwachung der Messdaten besonders wichtig ist.

Weiter ist es vorteilhaft, dass im Bearbeitungszentrum ein Steuersignalsender, in dem Werkzeug bzw. Aggregat ein Steuersignalempfänger sowie eine Betätigungseinrichtung angeordnet sind, und vom Steuersignalsender zum Steuersignalempfänger gesendete und dort empfangene Befehle zur Betätigungseinrichtung übermittelt werden, so dass das Bearbeitungszentrum das Werkzeug bzw. Aggregat kabellos steuern kann. Durch diese Ausführungsform wird der Vorteil der kabellosen Übertragung gewissermaßen verdoppelt, da nun auch die Steuerung einer Vielzahl von Werkzeugen bzw. Aggregaten ohne komplizierte und umfangreiche Verkabelung realisiert werden kann. Auch kann selbst in harschen Betriebsbedingungen, unter denen Kabel beschädigt werden könnten, eine sichere Kommunikation von Steuersignalen stattfinden, und somit eine zuverlässige Steuerung erzielt werden.

Die oben genannte Erfindung kann natürlich auch bei allen anderen Bearbeitungssystemen Anwendung finden, bei denen kritische physikalische Zustandsgrößen eingehalten werden müssen.

### Wege zur Ausführung der Erfindung

Im folgenden, ersten Ausführungsbeispiel wird die Erfindung anhand eines Vakuum-Aufspanntisches in einem Bearbeitungszentrum erläutert. Diese Vakuum-Aufspanntische (als Konsole oder in glatter Ausführung) nutzen die große Auflagefläche eines plattenförmigen Werkstücks aus, um es unter Einsatz von an vielen Stellen des Werkstücks positionierten Vakuumsaugern für die Bearbeitung beschädigungsfrei festzulegen.

Abhängig von der Werkstückgröße und -geometrie werden die einzelnen Sauger positioniert, von denen jeder mit einem Vakuumwächter als Unterdruck-Sensor versehen ist. Jeder Vakuumwächter ist zur Ausgabe seiner Messsignale mit einem RFID-Transponder als Sender elektrisch verbunden. In der Steuerung des Bearbeitungszentrums ist ein RFID-Sender/Empfänger als Empfänger eingebaut, der die Messsignale vom Sender empfängt und in die Steuerung eingibt. Es sei angemerkt, dass hier die RFID-Technik lediglich als Beispiel einer Übertragungstechnik genannt ist, und andere dem Fachmann bekannte kabellose Übertragungstechniken eingesetzt werden können.

Da der RFID-Transponder (Sender) selbst keine Energieversorgung hat, wird die zum Auslesen und Übertragen der Messdaten nötige Energie (Ausleseleistung) vom RFID-Sender/Empfänger abgestrahlt und von einer Antenne des RFID-Transponders empfangen. Diese Energie dient dann dazu, die Messdaten vom Transponder zum RFID-Sender/Empfänger zu senden. Zusätzlich kann bei ausreichender Ausleseleistung die dem RFID-Transponder zur Verfügung stehende Energie auch zum Auslesen des Sensors verwendet werden, so dass dieser auf keine eigene Energieversorgung angewiesen sein muss.

Im RFID-Transponder jedes Saugers ist ein spezifischer Code gespeichert, so dass der Steuerung im Bearbeitungszentrum beim Empfangen der Identität des Saugers die Möglichkeit gegeben wird, zu überprüfen ob es überhaupt der richtige Sauger ist. Weiterhin sind in dieser Ausführungsform RFID-Empfänger über dem Aufspanntisch installiert, die jeden Sauger orten (vgl. GPS) und dahin gehend überprüfen können, ob der richtige Sauger an der richtigen Stelle positioniert ist.

Von der Steuerung werden nun sukzessive die Daten des Sensors in jedem Sauger abgefragt und ausgewertet. Sollte es in einem Sauger zum einem Vakuumabfall kommen, der einen festgelegten Schwellenwert übersteigt, gibt die Steuerung einen Alarm aus und hält die Maschine an, um dem Benutzer die Möglichkeit zu geben, anhand der empfangenen Zustands- und Positionsdaten des Saugers diesen zu warten.

In einer weiteren Ausführungsform ist in jedem Sauger auch ein elektromagnetisches Absperrventil und ein Steuersignal-Empfänger, der Steuerdaten vom RFID-Sender/Empfänger im Bearbeitungszentrum empfangen kann, eingebaut. Das Absperrventil hat seine eigene, batteriebetriebene Stromversorgung, so dass keine zusätzlichen Kabel gelegt werden müssen. Wenn mittels des oben beschriebenen Ablaufs an einem Sauger ein den Grenzwert überschreitender Vakuumabfall festgestellt wird, kann nun die Steuerung ein Schließ-Signal senden, das vom Steuersignal-Empfänger empfangen und an das elektromagnetische Absperrventil weitergegeben wird, so dass dieses die Vakuumversorgung des betreffenden Saugers absperrt und so eine übermäßige Belastung der Vakuumpumpe oder gar einen sich durch das System propagierenden Vakuumabfall verhindert. Da nur in diesem Beispiel nur ein Sauger abgeschaltet wurde, kann die Steuerung in Abhängigkeit von der Gesamtzahl der Sauger und der Werkstückgeometrie entscheiden, ob es nötig ist, die Bearbeitung anzuhalten, oder ob auch mit einem Sauger weniger noch sicher gearbeitet werden kann.

In einer anderen Ausführungsform der Erfindung umfasst ein Bearbeitungszentrum ein auswechselbares Bohraggregat, das einen an die Bohrspitze gekoppelten Schwingungssensor aufweist. Auch hier ist das Bohraggregat mit einem Sender ausgestattet, der die Schwingungsdaten an den Empfänger in der Steuerung des Bearbeitungszentrums überträgt. Wird bei der Auswertung dieser Daten festgestellt, dass die Schwingungsamplituden oder die Schwingungsfrequenz sich außerhalb zugelassener Wertebereiche befinden, werden von der Steuerung automatisch Aktivitäten wie Vorschub- oder Drehzahlreduzierung durchgeführt, bis sich die überwachten Werte wieder stabilisiert haben.

## Patentansprüche

1. Vorrichtung zur Überwachung von Werkzeugen bzw. Aggregaten eines Bearbeitungszentrums, umfassend
jeweils mindestens einen in dem Werkzeug bzw. Aggregat angeordneten Sensor und einen damit verbundenen Sender, sowie einen mit dem oder den Sendern kommunizierenden, am Bearbeitungszentrum angebrachten Empfänger,
wobei der Sensor geeignet ist, Zustands- und/oder Funktionsdaten des jeweiligen Werkzeugs bzw. Aggregats zu messen und diese Daten dem Sender zu übermitteln, und
der Sender geeignet ist, die ihm übermittelten Daten an den Empfänger im Bearbeitungszentrum kabellos zu übertragen, so dass das Bearbeitungszentrum entsprechend den empfangenen Daten gesteuert werden kann,
**dadurch gekennzeichnet, dass** die Vorrichtung weiter einen oder mehrere Positionsempfänger umfasst, welche die Position des Werkzeugs bzw. Aggregats anhand der von dessen Sender kabellos gesendeten Datensignale bestimmt.

2. Vorrichtung nach Anspruch 1, wobei der Sender mit jeder Messdatenübertragung auch Identifikationsdaten des Werkzeugs bzw. des Aggregats überträgt.

3. Vorrichtung nach einem der Ansprüche 1 bis 2, wobei der Sender einen RFID-Transponder umfasst.

4. Vorrichtung nach einem der Ansprüche 1 bis 2, wobei der Sender ein Infrarot-Sender und der Empfänger ein Infrarot-Empfänger ist.

5. Vorrichtung nach einem der Ansprüche 1 bis 4, wobei der Sensor ein Vakuumwächter ist.

6. Vorrichtung nach einem der Ansprüche 1 bis 4, wobei der Sensor ein Temperatur-, Schwingungs- oder Drucksensor ist.

7. Vorrichtung nach einem der vorangegangenen Ansprüche, wobei das Werkzeug bzw. Aggregat auswechselbar ist.

8. Vorrichtung nach Anspruch 5, wobei das Werkzeug bzw. Aggregat ein mechanisches, hydraulisches oder pneumatisches Werkstückspannelement ist.

9. Vorrichtung nach einem der vorangehenden Ansprüche, wobei weiter im Bearbeitungszentrum ein Steuersignalsender, in dem Werkzeug bzw. Aggregat ein Steuersignalempfänger sowie eine Betätigungseinrichtung angeordnet sind, und vom Steuersignalsender zum Steuersignalempfänger gesendete und dort empfangene Befehle zur Betätigungseinrichtung übermittelt werden, so dass das Bearbeitungszentrum das Werkzeug bzw. Aggregat kabellos steuern kann.

## Claims

1. Apparatus for monitoring tools or units of a processing centre, comprising
in each case at least one sensor arranged in the tool or unit and a transmitter connected thereto, and
a receiver communicating with the transmitter or transmitters and mounted at the processing centre,
wherein the sensor is adapted to measure status and/or function data of the respective tool or unit and to send these data to the transmitter, and
the transmitter is adapted to wirelessly transmit the data sent to it to the receiver in the processing centre, so that the processing centre can be controlled according to the data received,
**characterised in that** the apparatus further comprises one or more position receivers, which determines the position of the tool or unit with the aid of the data signals sent wirelessly by its transmitter.

2. Apparatus according to claim 1, wherein the transmitter with each transmission of measurement data also transmits identification data of the tool or unit.

3. Apparatus according to either of claims 1 to 2, wherein the transmitter comprises an RFID transponder.

4. Apparatus according to either of claims 1 to 2, wherein the transmitter is an infrared transmitter and the receiver is an infrared receiver.

5. Apparatus according to any of claims 1 to 4, wherein the sensor is a vacuum monitor.

6. Apparatus according to any of claims 1 to 4, wherein the sensor is a temperature, vibration or pressure sensor.

7. Apparatus according to any of the preceding claims, wherein the tool or unit is exchangeable.

8. Apparatus according to claim 5, wherein the tool or unit is a mechanical, hydraulic or pneumatic workpiece clamping element.

9. Apparatus according to any of the preceding claims, wherein also in the processing centre is disposed a control signal transmitter, in the tool or unit is disposed a control signal receiver as well as an actuating device, and commands sent by the control signal transmitter to the control signal receiver and received there are forwarded to the actuating device, so that the processing centre can wirelessly control the tool or unit.

## Revendications

1. Dispositif pour la surveillance d'outils respectivement d'unités d'un centre d'usinage, comprenant
respectivement au moins un capteur disposé dans l'outil ou dans l'unité et un émetteur relié à celui-ci, ainsi que
un récepteur monté sur le centre d'usinage, communiquant avec le ou les émetteurs, le capteur convenant à la mesure des données d'état et/ou de fonction de l'outil ou de l'unité respectif et à la transmission de ces données à l'émetteur, et
l'émetteur convenant à la transmission sans câble des données qui lui sont transmises au récepteur dans le centre d'usinage de sorte que le centre d'usinage puisse être commandé selon les données reçues,
**caractérisé en ce que** le dispositif comporte en outre un ou plusieurs récepteurs de position qui détermine la position de l'outil ou de l'unité à l'aide de signaux de données émis sans câble par son émetteur.

2. Dispositif selon la revendication 1, dans lequel le capteur transmet aussi des données d'identification de l'outil ou de l'unité à chaque transmission de données de mesure.

3. Dispositif selon l'une quelconque des revendications 1 à 2, dans lequel l'émetteur comprend un transpondeur RFID.

4. Dispositif selon l'une quelconque des revendications 1 à 2, dans lequel l'émetteur est un émetteur infrarouge et le récepteur un récepteur infrarouge.

5. Dispositif selon l'une quelconque des revendications 1 à 4, dans lequel le capteur est un pressostat du vide.

6. Dispositif selon l'une quelconque des revendications 1 à 4, dans lequel le capteur est un capteur de température, d'oscillation ou de pression.

7. Dispositif selon l'une quelconque des revendications précédentes, dans lequel l'outil ou l'unité est interchangeable.

8. Dispositif selon la revendication 5, dans lequel l'outil ou l'unité est un élément de serrage de pièce mécanique, hydraulique ou pneumatique.

9. Dispositif selon l'une quelconque des revendications précédentes, dans lequel un émetteur de signaux de commande est disposé en outre dans le centre d'usinage, un récepteur de signaux de commande de même qu'un dispositif d'actionnement sont disposés dans l'outil ou l'unité, et des ordres reçus et émis de l'émetteur de signaux de commande au récepteur de signaux de commande sont transmis au dispositif d'actionnement de sorte que le centre d'usinage puisse commander sans câble l'outil ou l'unité.
